# EUROPEAN PATENT APPLICATION

(11) **EP 4 593 159 A1**
(43) Date of publication of application: **30.07.2025**
(21) Application number: 23869582.9
(22) Date of filing: 25.04.2023
(51) Int. Cl.: H01M 10/615, H01M 10/625, B60L 58/27

(54) **BATTERY SELF-HEATING DEVICE AND VEHICLE**

(30) Priority: 29.09.2022 CN 202211204372
(71) Applicant: BYD Company Limited, Shenzhen, Guangdong 518118 (CN)
(72) Inventor: LING, Heping, Shenzhen, Guangdong 518118 (CN); JIANG, Long, Shenzhen, Guangdong 518118 (CN); ZHU, Ke, Shenzhen, Guangdong 518118 (CN); GUO, Zike, Shenzhen, Guangdong 518118 (CN); XIE, Jinyue, Shenzhen, Guangdong 518118 (CN)
(74) Representative: Wu, Ting
(86) International application number: PCT/CN2023/090700
(87) International publication number: WO 2024/066326

(57) **Abstract**

A battery self-heating device and a vehicle. The device comprises a battery self-heating circuit and a controller. The battery self-heating circuit comprises a first battery group, a second battery group, a bridge arm, and a winding corresponding to the bridge arm. A negative electrode of the first battery group is connected to a positive electrode of the second battery group, and the negative electrode of the first battery group and the positive electrode of the second battery group are connected to an output end of the winding. An input end of the winding is connected to a midpoint of the bridge arm. A positive electrode of the first battery group is connected to a first bus end of the bridge arm. A negative electrode of the second battery group is connected to a second bus end of the bridge arm. The controller is configured to adjust the duty ratio of the bridge arm according to a target duty ratio range.

## Description

### CROSS-REFERENCE TO RELATED APPLICATIONS

This application claims priority to and benefits of Chinese Patent Application No. 202211204372.7, filed on September 29, 2022. The entire content of the above-referenced application is incorporated herein by reference.

### FIELD

The present disclosure relates to the field of battery technologies, and specifically, to a battery self-heating device and a vehicle.

### BACKGROUND

In the related art, new energy vehicles may perform battery self-heating. However, a fundamental frequency during battery self-heating generates high-amplitude electromagnetic interference. Therefore, how to reduce electromagnetic interference generated during battery self-heating is an urgent technical problem that needs to be resolved.

### SUMMARY

The summary section is provided to briefly introduce concepts of the present disclosure, and the concepts will be described in detail below in the detailed description section. The summary section is not intended to identify key features or necessary features of the claimed technical solutions, and is not intended to limit the scope of the claimed technical solutions.

According to a first aspect, the present disclosure provides a battery self-heating device, including: a battery self-heating circuit and a controller. The battery self-heating circuit includes a first battery group, a second battery group, a bridge arm, and a winding corresponding to the bridge arm.

A negative electrode of the first battery group is connected to a positive electrode of the second battery group. The negative electrode of the first battery group and the positive electrode of the second battery group are connected to an output end of the winding. An input end of the winding is connected to a midpoint of the bridge arm.

A positive electrode of the first battery group is connected to a first bus end of the bridge arm, and a negative electrode of the second battery group is connected to a second bus end of the bridge arm.

The controller is configured to adjust a duty ratio of the bridge arm according to a target duty ratio range in response to detecting that the battery self-heating circuit is in an operating state, to configure a fundamental frequency of a heating current of the battery self-heating circuit to change within a target fundamental frequency range. The target duty ratio range is obtained according to a mapping relationship between the fundamental frequency and the duty ratio.

Optionally, the controller is configured to:
within a preset duration, randomly select a target duty ratio from the target duty ratio range, and adjust the duty ratio of the bridge arm according to the target duty ratio, to configure the fundamental frequency of the heating current to change within the target fundamental frequency range.

Optionally, the controller is configured to:
adjust the duty ratio of the bridge arm to a first lower limit, a first upper limit, and the first lower limit sequentially within a preset duration according to the target duty ratio range, to configure the fundamental frequency of the heating current to change to a second lower limit, a second upper limit, and the second lower limit sequentially.

The first lower limit and the first upper limit are obtained according to the target duty ratio range, and the second lower limit and the second upper limit are obtained according to the target fundamental frequency range.

Optionally, the controller is configured to:
obtain a time-domain waveform of the heating current, the time-domain waveform being configured to reflect a change of the heating current in time domain;
perform a Fourier transform on the time-domain waveform to obtain a frequency-domain waveform, the frequency-domain waveform being configured to reflect a change of the heating current in frequency domain; and
adjust the duty ratio of the bridge arm according to a noise amplitude in the frequency-domain waveform, to correspondingly adjust the fundamental frequency of the heating current.

Optionally, the bridge arm is a multi-phase bridge arm, the winding is a multi-phase winding, a plurality of phase bridge arms of the multi-phase bridge arm are in a one-to-one correspondence with a plurality of phase windings of the multi-phase winding, and each of the plurality of phase windings is connected to a midpoint of the corresponding bridge arm.

Optionally, the battery self-heating circuit further includes a first capacitor and a second capacitor; and
a first end of the second capacitor is connected to a second end of the first capacitor, the first end of the second capacitor and the second end of the first capacitor are connected to the output end of the winding, a second end of the second capacitor is connected to the negative electrode of the second battery group, and a first end of the first capacitor is connected to the positive electrode of the first battery group.

Optionally, the battery self-heating circuit further includes a first switch, and the first end of the second capacitor and the second end of the first capacitor are connected to the output end of the winding through the first switch.

Optionally, the battery self-heating circuit further includes a second switch, and the negative electrode of the first battery group and the positive electrode of the second battery group are connected to the output end of the winding through the second switch.

Optionally, the winding is a winding in a motor of a vehicle, and the bridge arm is a bridge arm switch configured to control the motor in the vehicle.

Optionally, the battery self-heating circuit further includes a direct-current (DC) charging port, the output end of the winding is connected to a positive electrode of the DC charging port, and a second bus end of the bridge arm is connected to a negative electrode of the DC charging port.

Optionally, the battery self-heating circuit further includes a third switch, the first bus end of the bridge arm is connected to a first end of the third switch, and a second end of the third switch is connected to the positive electrode of the DC charging port.

According to a second aspect, the present disclosure provides a vehicle, including the battery self-heating device according to any of the embodiments of the first aspect.

By the foregoing technical solution, the duty ratio of the bridge arm is adjusted according to the target duty ratio range, to configure the fundamental frequency of the heating current of the battery self-heating circuit to change within the target fundamental frequency range. Therefore, there is a continuously changing sine wave heating current in the target fundamental frequency range. Because the current waveform of the heating current is a sine wave, the waveform of the heating current has the same amplitude, so that an intensity of electromagnetic interference is distributed to other frequencies, to reduce a magnetic induction intensity configured by electromagnetic compatibility EMC. In addition, an amplitude of the electromagnetic interference in the target fundamental frequency range can also be effectively reduced.

Other features and advantages of the present disclosure will be described in detail below in the detailed description section.

### BRIEF DESCRIPTION OF THE DRAWINGS

The above-mentioned and other features, advantages, and aspects of the embodiments of the present disclosure will become more apparent with reference to the accompanying drawings and the detailed description section below. The same or similar reference numerals throughout the accompanying drawings represent the same or similar elements. It should be understood that the accompanying drawings are schematic, and components and elements are not necessarily drawn to scale. In the accompanying drawings:
FIG. 1 is a structural block diagram of a battery self-heating device according to an exemplary embodiment of the present disclosure;
FIG. 2 is a circuit diagram of a battery self-heating circuit according to an exemplary embodiment of the present disclosure;
FIG. 3 is a schematic diagram of a current direction of a timing sequence 1 according to an exemplary embodiment of the present disclosure;
FIG. 4 is a schematic diagram of a current direction of a timing sequence 2 according to an exemplary embodiment of the present disclosure;
FIG. 5 is a schematic diagram of a current direction of a timing sequence 3 according to an exemplary embodiment of the present disclosure;
FIG. 6 is a schematic diagram of a current direction of a timing sequence 4 according to an exemplary embodiment of the present disclosure;
FIG. 7 is a schematic diagram of a waveform of a heating current at a fixed fundamental frequency according to an exemplary embodiment of the present disclosure;
FIG. 8 is a schematic diagram of a change of a low-frequency magnetic field amplitude of a battery self-heating circuit at a fixed fundamental frequency according to an exemplary embodiment of the present disclosure;
FIG. 9 is a schematic diagram of a waveform of a heating current at a fundamental frequency according to an exemplary embodiment of the present disclosure; and
FIG. 10 is a schematic diagram of a change of a low-frequency magnetic field amplitude of a battery self-heating circuit of a varying fundamental frequency according to an exemplary embodiment of the present disclosure.

### DETAILED DESCRIPTION

The following describes embodiments of the present disclosure in more detail below with reference to the accompanying drawings. Although some embodiments of the present disclosure are shown in the accompanying drawings, it should be understood that the present disclosure may be implemented in various forms and should not be construed as being limited to embodiments illustrated herein. On the contrary, these embodiments are provided for a more thorough and complete understanding of the present disclosure. It should be understood that the accompanying drawings and embodiments of the present disclosure are merely used as examples, but are not intended to limit the protection scope of the present disclosure.

The terms such as "include", "comprise", and their variants used herein mean open-ended inclusion, that is, "including but not limited to". The term "based on" means "based at least in part on". The terms "one embodiment" and "an embodiment" mean "at least one embodiment". The term "another embodiment" means "at least one other embodiment". The term "some embodiments" means "at least some embodiments". Related definitions of other terms will be described below.

It should be noted that the terms such as "first" and "second", used in the present disclosure are only used to distinguish different devices, modules, or units, and are not intended to indicate any order or interdependence of functions performed by these devices, modules, or units.

It should be noted that the terms "one" and "plurality of" used as modifiers in the present disclosure are illustrative and not restrictive. Those skilled in the art should understand that unless otherwise clearly indicated in the context, such terms should be understood as "one or more".

Names of messages or information exchanged between a plurality of devices in the embodiments of the present disclosure are only for illustrative purposes, and are not intended to limit the scope of such messages or information.

With the development of technologies such as intelligent networking, electrification, and advanced driving assistance system (ADAS), electronic and electric control devices of vehicles may be interference sources of electromagnetic compatibility (EMC) problems. New energy vehicles are facing more complex electromagnetic environments, because new energy vehicles directly use an electric drive system to provide a driving force. For example, a high transient voltage or current configured by switching on and off a high-power semiconductor switching device in the electric drive system emits strong radiation and electromagnetic interference. In addition, in a self-heating solution of the electric drive system, a fixed fundamental frequency used for self-heating of a battery generates high-amplitude electromagnetic interference.

However, new energy vehicles have high EMC requirements for sensitive electronic components. In addition, high-amplitude electromagnetic interference will negatively affect health of human bodies in the long term. In the related art, the amplitude of electromagnetic interference may be reduced by using the following solutions. A good-quality wrapping material is used to wrap an interference source in a vehicle. The material with a strong anti-interference capability can effectively reduce the strength of electromagnetic interference signals during propagation, and reduce the amplitude of electromagnetic interference. A filter is used to perform filtering through a resistor and an inductor in a resistor-capacitor (RC) circuit, to reduce the electromagnetic interference signals and reduce the electromagnetic interference amplitude of the electromagnetic interference signals. However, regardless of whether the wrapping material or the filter is used, usage costs are increased, and the electromagnetic interference amplitude in a fundamental frequency band cannot be effectively reduced.

In view of this, the present disclosure provides a battery self-heating device, which can effectively reduce the electromagnetic interference amplitude configured by a fundamental frequency during battery self-heating. A battery heating device of the present disclosure will be described in detail below.

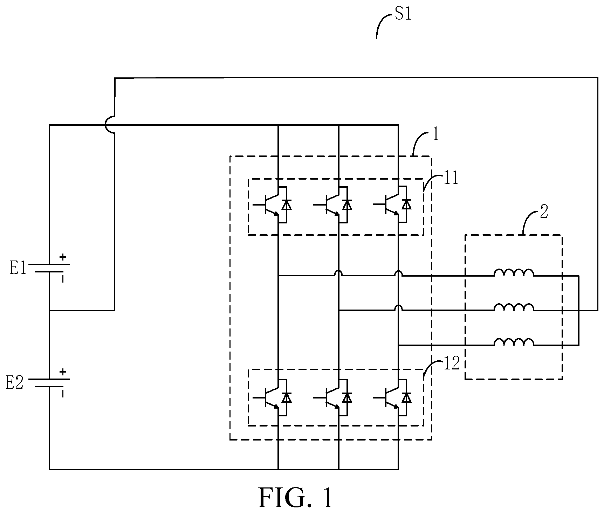

FIG. 1 is a structural block diagram of a battery self-heating device according to an exemplary embodiment of the present disclosure; As shown in FIG. 1, the device includes a battery self-heating circuit S1 and a controller (not shown in FIG. 1). The battery self-heating circuit S1 includes a first battery group E1, a second battery group E2, a bridge arm 1, and a winding 2 corresponding to the bridge arm 1. A negative electrode of the first battery group E1 is connected to a positive electrode of the second battery group E2. The negative electrode of the first battery group E1 and the positive electrode of the second battery group E2 are connected to an output end of the winding 2. An input end of the winding 2 is connected to a midpoint of the bridge arm 1. A positive electrode of the first battery group E1 is connected to a first bus end of the bridge arm 1. A negative electrode of the second battery group E2 is connected to a second bus end of the bridge arm 1. The controller is configured to adjust a duty ratio of the bridge arm 1 according to a target duty ratio range in response to detecting that the battery self-heating circuit S1 is in an operating state, to configure a fundamental frequency of a heating current of the battery self-heating circuit S1 to change within a target fundamental frequency range. The target duty ratio range is obtained according to a mapping relationship between the fundamental frequency and the duty ratio.

In some embodiments, the controller may be further configured to control the battery self-heating circuit S1 to enter the operating state. For example, the controller may be further configured to control an upper bridge arm and a lower bridge arm included in the bridge arm 1 to alternately turn on or off, to configure the first battery group E1 and the second battery group E2 to charge or discharge through the winding 2 respectively, to trigger the battery self-heating circuit S1 to enter the operating state. It may be learned that the battery self-heating circuit S1 implements self-heating through interleaved oscillation of the battery.

In some embodiments, the bridge arm may be a multi-phase bridge arm, the winding may be a multi-phase winding, a plurality of phase bridge arms of the multi-phase bridge arm are in a one-to-one correspondence with a plurality of phase windings of the multi-phase winding, and each of the plurality of phase windings is connected to a midpoint of the corresponding bridge arm, i.e., an input end of each phase line of the winding is connected to the midpoint of the corresponding bridge arm. For the multi-phase winding, the output end of the winding may be a midpoint of output ends of the phase lines of the multi-phase winding. As shown in FIG. 1, the plurality of phase bridge arms may be three phase bridge arms, and the plurality of phase windings may be three phase windings.

It should be noted that, the battery self-heating circuit in the present disclosure may be any self-heating circuit that charges or discharges the first battery group and the second battery group through an oscillating current generated by the bridge arm and the winding, to realize battery self-heating. The number of phases of the bridge arm and the number of phases of the winding may not be limited in the present disclosure. For example, the bridge arm may also be a single-phase bridge arm, and the winding may be a single-phase winding corresponding to the single-phase bridge arm.

To describe the self-heating principle of the battery self-heating circuit of the present disclosure more clearly, the battery self-heating circuit shown in FIG. 1 is used for description below.

For example, the battery self-heating circuit may experience the following four timing sequences.

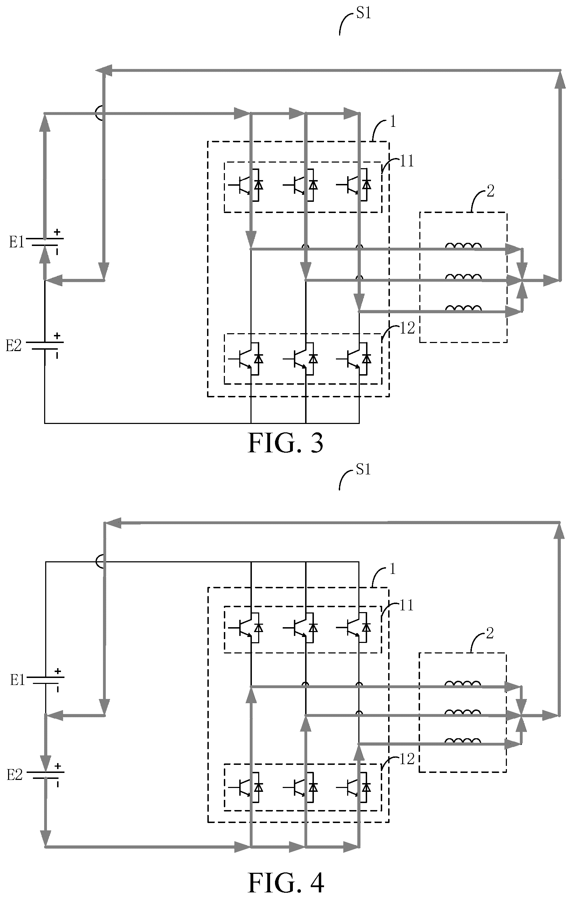

Timing sequence 1: An upper bridge arm 11 of the bridge arm 1 is connected, and a lower bridge arm 12 of the bridge arm 1 is disconnected. A current flows out from the positive electrode of the first battery group E1, and charges the winding 2 through the upper bridge arm 11. Then, the charging current flows back to the negative electrode of the first battery group E1 through the output end of the winding. In this stage, the first battery group E1 discharges to charge the winding 2. For the current direction corresponding to the timing sequence 1, refer to FIG. 3.

Timing sequence 2: The upper bridge arm 11 of the bridge arm 1 is disconnected, and the lower bridge arm 12 of the bridge arm 1 is connected. A current flows out from the output end of the winding 2 to charge the second battery group E2, and flows back to the input end of the winding 2 through the lower bridge arm 12 of the bridge arm 1. In this stage, the winding 2 discharges to charge the second battery E2. For the current direction corresponding to the timing sequence 2, refer to FIG. 4.

Through switching between the timing sequence 1 and the timing sequence 2, discharging of the first battery group E1 and charging of the second battery group E2 may be realized.

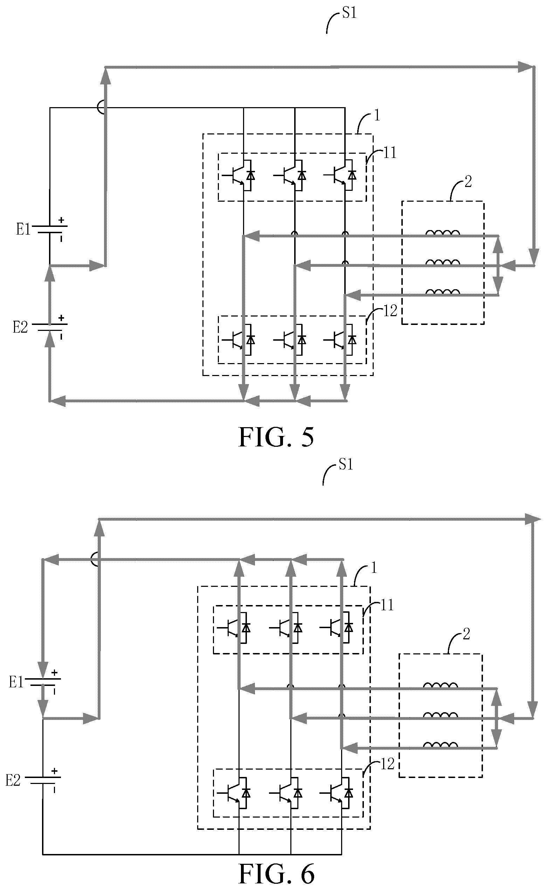

Timing sequence 3: The upper bridge arm 11 of the bridge arm 1 is disconnected, and the lower bridge arm 12 of the bridge arm 1 is connected. A current flows out from the positive electrode of the second battery group E2 to charge the winding 2, and flows back to the negative electrode of the second battery group E2 through the lower bridge arm 12 of the bridge arm 1. In this stage, the second battery group E2 discharges to charge the winding 2. For the current direction corresponding to the timing sequence 3, refer to FIG. 5.

Timing sequence 4: The upper bridge arm 11 of the bridge arm 1 is connected, and the lower bridge arm 12 of the bridge arm 1 is disconnected. A current flows out from the input end of the winding 2, charges the first battery group E1 through the upper bridge arm 11 of the bridge arm 1, and flows back to the output end of the winding 2. In this stage, the winding 2 discharges to charge the first battery group E1. For the current direction corresponding to the timing sequence 4, refer to FIG. 6.

Through switching between the timing sequence 3 and the timing sequence 4, charging of the first battery group E1 and discharging of the second battery group E2 may be realized.

It may be learned that, through switching between the timing sequences 1 and 2 and switching between the timing sequences 3 and 4, charging and discharging of the first battery group E1 and charging and discharging of the second battery group E2 may be realized. In some embodiments, the first battery group E1 and the second battery group E2 may jointly form a high-voltage power battery. Charge and discharge currents of the first battery group E1 and the second battery pack E2 are interleaved, so that a battery ripple during battery oscillation heating may be further reduced.

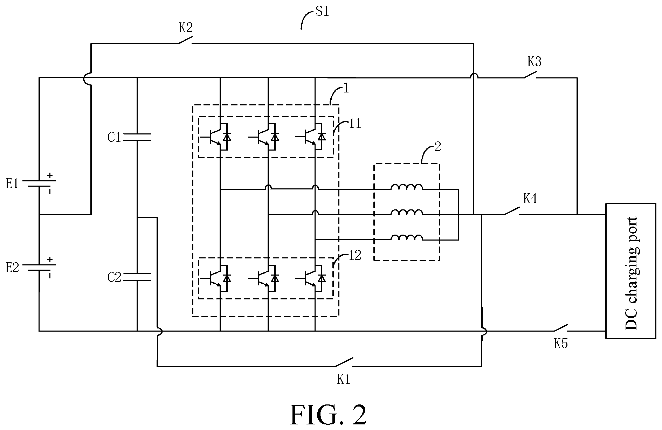

As shown in FIG. 2, in some embodiments, the battery self-heating circuit may further include a first capacitor C1 and a second capacitor C2. A first end of the second capacitor C2 is connected to a second end of the first capacitor C1. The first end of the second capacitor C2 and the second end of the first capacitor C1 are connected to the output end of the winding 2. A second end of the second capacitor C2 is connected to a negative electrode of the second battery group E2. A first end of the first capacitor C1 is connected to a positive electrode of the first battery group E1. In some embodiments, the first capacitor C1 and the second capacitor C2 may each be an X capacitor, and the X capacitor is a capacitor for suppressing electromagnetic interference of a power supply.

By connecting two capacitors in parallel between the two ends of the first battery group E1 and the second battery group E2, i.e., connecting the first capacitor C1 and the second capacitor C2 in parallel, a carrier frequency of the self-heating circuit may be suppressed. EMC interference may be further reduced by suppressing the carrier frequency.

As shown in FIG. 2, in some embodiments, the battery self-heating circuit may further include a first switch K1. The first end of the second capacitor C2 and the second end of the first capacitor C1 are connected to the output end of the winding 2 through the first switch K1. The arrangement of the first switch K1 can facilitate enabling and disabling of a carrier frequency suppression function of the battery self-heating circuit, and an effect of reducing electromagnetic interference in the battery self-heating circuit may be further improved by enabling the carrier frequency suppression function. In some embodiments, the controller may be further configured to, in response to detecting that the battery self-heating circuit is in the operating state, control the first switch K1 to turn on, to enable the carrier frequency suppression function of the battery self-heating circuit.

As shown in FIG. 2, in some embodiments, the battery self-heating circuit may further include a second switch K2. The negative electrode of the first battery group E1 and the positive electrode of the second battery group E2 are connected to the output end of the winding 2 through the second switch K2. The arrangement of the second switch K2 can facilitate enabling or disabling of a self-heating function of the battery self-heating circuit, i.e., facilitate control of the battery self-heating circuit to enter the operating state. In some embodiments, the controller may be further configured to control the second switch K2 to turn on, to enable the self-heating function of the battery self-heating circuit, and trigger the battery self-heating circuit to enter the operating state.

In some embodiments, the winding 2 is a winding in a motor of a vehicle, and the bridge arm 1 is a bridge arm switch configured to control the motor in the vehicle.

As shown in FIG. 2, in some embodiments, the battery self-heating circuit further includes a direct-current (DC) charging port. The output end of the winding 2 is connected to a positive electrode of the DC charging port. The second bus end of the bridge arm 1 is connected to a negative electrode of the DC charging port. The arrangement of the DC charging port allows for direct-connection charging of the vehicle.

As shown in FIG. 2, in some embodiments, the battery self-heating circuit may further include a third switch K3. The first bus end of the bridge arm 1 is connected to a first end of the third switch K3, and a second end of the third switch K3 is connected to the positive electrode of the DC charging port. The arrangement of the third switch K3 can facilitate control of the direct-connection charging of the vehicle. In some embodiments, the controller may be further configured to control the first switch K1 to turn off, the second switch K2 to turn off, and the third switch K3 to turn on, to realize direct-connection charging of the vehicle. When detecting that the vehicle requires direct-connection charging, the controller may control the first switch K1 to turn off, the second switch K2 to turn off, and the third switch K3 to turn on.

As shown in FIG. 2, in some embodiments, the battery self-heating circuit may further include a fourth switch K4 and a fifth switch K5. The output end of the winding 2 is connected to the positive electrode of the DC charging port through the fourth switch K4. The second bus end of the bridge arm 1 is connected to the negative electrode of the DC charging port through the fifth switch K5. The controller may be configured to control the first switch K1 to turn off, the second switch K2 to turn off, the third switch K3 to turn on, the fourth switch K4 to turn off, and the fifth switch K5 to turn on, to realize direct-connection charging of the vehicle.

In some embodiments, the controller may be further configured to control the first switch K1 to turn off, the second switch K2 to turn off, the third switch K3 to turn off, the fourth switch K4 to turn on, and the fifth switch K5 to turn on, to realize boosting charging of the vehicle. When detecting that the vehicle requires boosting charging, the controller may control the first switch K1 to turn off, the second switch K2 to turn off, the third switch K3 to turn off, the fourth switch K4 to turn on, and the fifth switch K5 to turn on.

In some embodiments, the controller may be further configured to control the first switch K1 to turn off, the second switch K2 to turn off, the third switch K3 to turn off, the fourth switch K4 to turn off, and the fifth switch K5 to turn off, so that the vehicle drives normally.

As described above, the controller is configured to adjust the duty ratio of the bridge arm according to the target duty ratio range in response to detecting that the battery self-heating circuit is in the operating state, to configure the fundamental frequency of the heating current of the battery self-heating circuit to change within the target fundamental frequency range, where the target duty ratio range is obtained according to the mapping relationship between the fundamental frequency and the duty ratio. For example, the foregoing timing sequences 1 to 4 are used as an example. Assuming that a total duration of the timing sequence 1 and the timing sequence 2 is t1 and a total duration of the timing sequence 3 and the timing sequence 4 is t2, the duty ratio of the bridge arm may be t1/(t1+t2).

Because the battery self-heating circuit performs heating heats by battery oscillation, an oscillating current waveform during self-heating is a pulse width modulation (PWM) waveform. The PWM waveform is a carrier wave, and its frequency is a carrier frequency. Sinusoidal pulse width modulation may be performed on the PWM wave to obtain a pulse sequence of a sine wave, which is a fundamental wave, the frequency of which is a fundamental frequency. A pulse width may be modulated by modulating a frequency of the carrier wave, thus changing the fundamental frequency.

Frequency (for example, a carrier frequency or a fundamental frequency) relates to period, and frequency and period are reciprocal quantities. The pulse width and the duty ratio relate to period. The pulse width is a time occupied by a high level in one period, and the duty ratio is a proportion of the high level in one period. For example, assuming that the frequency is F and the duty ratio is P, the pulse width is equal to (1/F)*P. Therefore, the duty ratio is proportional to the fundamental frequency.

The target duty ratio range may be a duty ratio range required for achieving the target fundamental frequency range, and the target duty ratio range may be preset according to the mapping relationship between the fundamental frequency and the duty ratio.

In the present disclosure, the duty ratio of the bridge arm is adjusted according to the target duty ratio range, to configure the fundamental frequency of the heating current of the battery self-heating circuit to change within the target fundamental frequency range. Therefore, there is a continuously changing sine wave heating current in the target fundamental frequency range. Compared with a solution using a fixed fundamental frequency in the related art, the current waveform in the present disclosure is a sine wave, and the waveform of the heating current has the same amplitude, so that an intensity of electromagnetic interference is distributed to other frequencies, to reduce a magnetic induction intensity configured by electromagnetic compatibility EMC. In addition, an amplitude of the electromagnetic interference in the target fundamental frequency range can also be effectively reduced.

In some embodiments, the controller may use a variety of methods to cause the fundamental frequency of the heating current to change within the target fundamental frequency range. In some embodiments, the controller may be configured to, within a preset duration, randomly select a target duty ratio from the target duty ratio range, and adjust the duty ratio of the bridge arm according to the target duty ratio, to configure the fundamental frequency of the heating current to change within the target fundamental frequency range. The fundamental frequency of the heating current may be randomly changed by randomly selecting the target duty ratio.

In some embodiments, the controller is configured to: adjust the duty ratio of the bridge arm to a first lower limit, a first upper limit, and the first lower limit sequentially within a preset duration according to the target duty ratio range, to configure the fundamental frequency of the heating current to change to a second lower limit, a second upper limit, and the second lower limit sequentially; wherein the first lower limit and the first upper limit are obtained according to the target duty ratio range, and the second lower limit and the second upper limit are obtained according to the target fundamental frequency range. By changing the fundamental frequency to the second lower limit, the second upper limit, and the second lower limit sequentially, a fundamental frequency variation may be realized within one period, i.e., the fundamental frequency may be changed within one period. Correspondingly, the preset duration may be a period of the fundamental frequency variation.

In some embodiments, the preset duration may be specifically determined according to an actual situation. For example, the preset duration may be randomly selected from (0, 1] seconds. The preset duration may be as short as possible to improve the EMC suppression effect.

In some embodiments, the target fundamental frequency range may be specifically determined according to an actual situation. For example, the target fundamental frequency range may be 40 Hz to 60 Hz, the second lower limit may be 40 Hz, and the second upper limit may be 60 Hz. Correspondingly, the first upper limit may be a duty ratio corresponding to a fundamental frequency of 60 Hz, and the first lower limit may be a duty ratio corresponding to a fundamental frequency of 40 Hz. For example, in the present disclosure, the fundamental frequency may be changed from 40 Hz to 60 Hz and then back to 40 Hz by adjusting the duty ratio, thereby realizing a frequency variation of the fundamental wave in one period. Correspondingly, the period may be a preset duration.

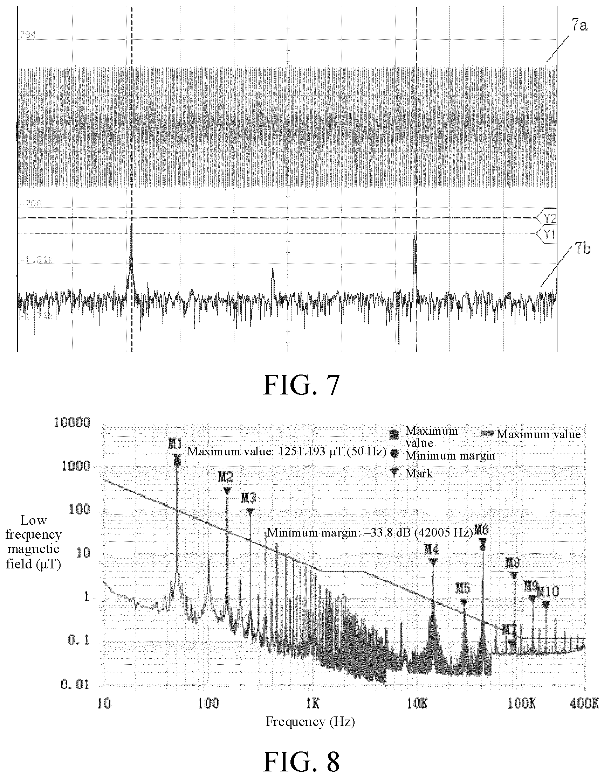

For example, refer to FIG. 7. FIG. 7 is a schematic diagram of a waveform of a heating current at a fixed fundamental frequency. In FIG. 7, a waveform 7a is a time-domain waveform of the heating current, where an X-axis of the waveform 7a represents time, and a Y-axis of the waveform 7a represents current magnitude; a waveform 7b is a frequency-domain waveform of the self-heating current, i.e., a frequency discrete signal obtained through a Fourier transform performed on the time-domain waveform. According to FIG. 7, a frequency of 50 Hz corresponds to a noise amplitude of 51.5 dB. FIG. 8 is a schematic diagram of a change of a low-frequency magnetic field amplitude of a battery self-heating circuit at a fixed fundamental frequency. An X-axis of the waveform represents frequency, and a Y-axis represents low-frequency magnetic field amplitude. It may be learned from FIG. 4 that, when the frequency is 50 Hz, the low-frequency magnetic field amplitude is 1251.1 µT.

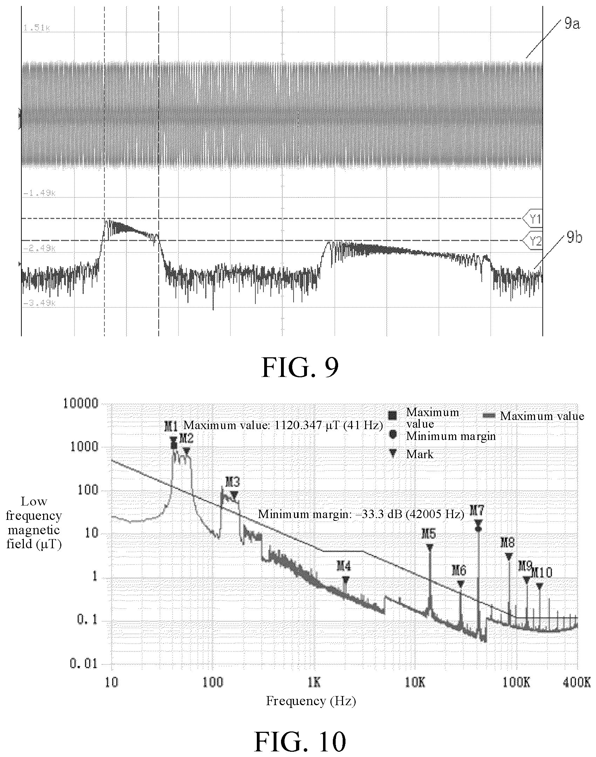

FIG. 9 is a schematic diagram of a waveform of a heating current at a varying fundamental frequency. In FIG. 9, a waveform 9a is a time-domain waveform of the self-heating current, where an X-axis of the waveform 9a represents time, and a Y-axis of the waveform 9a represents current magnitude; a waveform 9b is a frequency-domain waveform of the self-heating current, i.e., a frequency discrete signal obtained through a Fourier transform performed on the time-domain waveform. According to FIG. 9, a frequency of 50 Hz corresponds to a noise amplitude of 21 dB. Compared with FIG. 7, the varying fundamental frequency weakened peak values corresponding to 50 Hz, made the waveform smoother, and reduced the noise amplitude. Referring to FIG. 10, FIG. 10 is a schematic diagram of a change of a low-frequency magnetic field amplitude of a battery self-heating circuit at a varying fundamental frequency. An X-axis of the waveform represents frequency, and a Y-axis represents low-frequency magnetic field amplitude. According to FIG. 10, when the frequency is 50 Hz, the low-frequency magnetic field amplitude is 1120 µT. Compared with FIG. 8, the varying fundamental frequency weakened the low-frequency magnetic field amplitude corresponding to 50 Hz.

It may be learned from FIG. 7 to FIG. 10 that by changing the fundamental frequency of the heating current of the battery self-heating circuit, the noise amplitude and the low-frequency magnetic field amplitude may be significantly reduced, i.e., the electromagnetic interference intensity is reduced.

In some embodiments, the controller may be configured to: obtain a time-domain waveform of the heating current, where the time-domain waveform is configured to reflect a change of the heating current in time domain; perform a Fourier transform on the time-domain waveform to obtain a frequency-domain waveform, where the frequency-domain waveform is configured to reflect a change of the heating current in frequency domain; and adjust the duty ratio of the bridge arm according to a noise amplitude in the frequency-domain waveform, to correspondingly adjust the fundamental frequency of the heating current. For forms of the time-domain waveform and the frequency-domain waveform, reference may be made to FIG. 7 or FIG. 9, and the details will not be described herein again.

For example, after obtaining the frequency-domain waveform, the controller may increase the duty ratio in response to the noise amplitude exceeding a preset threshold, so as to increase the fundamental frequency, thereby reducing the noise amplitude. Since the controller adjusts the fundamental frequency of the heating current according to the noise amplitude of the frequency-domain waveform and adjusts the fundamental frequency based on the frequency-domain waveform, the fundamental frequency can be adjusted more accurately, thereby better suppressing the EMC interference.

The present disclosure further provides a vehicle, including the battery self-heating device according to any one of the above embodiments. Specific details of the vehicle in this embodiment have been described in detail in the embodiments of the related battery self-heating device and will not be elaborated herein again.

Preferred embodiments of the present disclosure have been described in detail above with reference to the accompanying drawings, but the present disclosure is not limited to the specific details in the above embodiments. Various simple modifications can be made to the technical solutions of the present disclosure without departing from the scope of the technical concept of the present disclosure, and such simple modifications all fall within the protection scope of the present disclosure.

It should also be noted that the specific technical features described in the specific embodiments may be combined in any suitable manner provided that no conflict occurs. Various possible combinations in the present disclosure will not be described in order to avoid unnecessary repetition.

In addition, the various embodiments provided by the present disclosure may be arbitrarily combined without departing from the idea of the present disclosure, and such combinations are also to be construed as contents disclosed in the present disclosure.

### List of reference numerals

S1 - battery self-heating circuit, 1 - bridge arm, 11 - upper bridge arm, 12 - lower bridge arm, 2 - winding, E1 - first battery group, E2 - second battery group, C1 - first capacitor, C2 - second capacitor, K1 - first switch, K2 - second switch, K3 - third switch, K4 - fourth switch, K5 - fifth switch.

## Claims

1. A battery self-heating device, comprising: a battery self-heating circuit (S1) and a controller, the battery self-heating circuit (S1) comprising a first battery group (E1), a second battery group (E2), a bridge arm (1), and a winding (2) corresponding to the bridge arm (1);
a negative electrode of the first battery group (E1) being connected to a positive electrode of the second battery group (E2), the negative electrode of the first battery group (E1) and the positive electrode of the second battery group (E2) being connected to an output end of the winding (2), and an input end of the winding (2) being connected to a midpoint of the bridge arm (1);
a positive electrode of the first battery group (E1) being connected to a first bus end of the bridge arm (1), and a negative electrode of the second battery group (E2) being connected to a second bus end of the bridge arm (1); and
the controller being configured to adjust a duty ratio of the bridge arm (1) according to a target duty ratio range in response to detecting that the battery self-heating circuit (S1) is in an operating state, to configure a fundamental frequency of a heating current of the battery self-heating circuit (S1) to change within a target fundamental frequency range, the target duty ratio range being obtained according to a mapping relationship between the fundamental frequency and the duty ratio.

2. The battery self-heating device according to claim 1, wherein the controller is configured to:
within a duration, select a target duty ratio from the target duty ratio range, and adjust the duty ratio of the bridge arm (1) according to the target duty ratio, to configure the fundamental frequency of the heating current to change within the target fundamental frequency range.

3. The battery self-heating device according to claim 1, wherein the controller is configured to:
adjust the duty ratio of the bridge arm (1) to a first lower limit, a first upper limit, and the first lower limit sequentially within a preset duration according to the target duty ratio range, to configure the fundamental frequency of the heating current to a second lower limit, a second upper limit, and the second lower limit sequentially;
wherein the first lower limit and the first upper limit are obtained according to the target duty ratio range, and the second lower limit and the second upper limit are obtained according to the target fundamental frequency range.

4. The battery self-heating device according to any one of claims 1 to 3, wherein the controller is configured to:
obtain a time-domain waveform of the heating current, the time-domain waveform indicating a change of the heating current in time domain;
perform a Fourier transform on the time-domain waveform to obtain a frequency-domain waveform, the frequency-domain waveform being configured to reflect a change of the heating current in frequency domain; and
adjust the duty ratio of the bridge arm (1) according to a noise amplitude in the frequency-domain waveform, to adjust the fundamental frequency of the heating current.

5. The battery self-heating device according to any one of claims 1 to 4, wherein the bridge arm (1) is a multi-phase bridge arm comprising a plurality of phase bridge arms, the winding (2) is a multi-phase winding comprising a plurality of phase windings, each of the phase windings corresponds to one of the phase bridge arms, and each of the phase windings is connected to a midpoint of the corresponding bridge arm.

6. The battery self-heating device according to any one of claims 1 to 5, wherein the battery self-heating circuit (S1) further comprises a first capacitor (C1) and a second capacitor (C2); and
a first end of the second capacitor (C2) is connected to a second end of the first capacitor (C1), the first end of the second capacitor (C2) and the second end of the first capacitor (C1) are connected to the output end of the winding (2), a second end of the second capacitor (C2) is connected to the negative electrode of the second battery group (E2), and a first end of the first capacitor (C1) is connected to the positive electrode of the first battery group (E1).

7. The battery self-heating device according to claim 6, wherein the battery self-heating circuit (S1) further comprises a first switch (K1), and the first end of the second capacitor (C2) and the second end of the first capacitor (C1) are connected to the output end of the winding (2) through the first switch (K1).

8. The battery self-heating device according to any one of claims 1 to 7, wherein the battery self-heating circuit (S1) further comprises a second switch (K2), and the negative electrode of the first battery group (E1) and the positive electrode of the second battery group (E2) are connected to the output end of the winding (2) through the second switch (K2).

9. The battery self-heating device according to any one of claims 1 to 8, wherein the winding (2) is in a motor of a vehicle, and the bridge arm (1) is a bridge arm switch configured to control the motor in the vehicle.

10. The battery self-heating device according to any one of claims 1 to 9, wherein the battery self-heating circuit (S1) further comprises a direct-current (DC) charging port, the output end of the winding (2) is connected to a positive electrode of the DC charging port, and a second bus end of the bridge arm (1) is connected to a negative electrode of the DC charging port.

11. The battery self-heating device according to claim 10, wherein the battery self-heating circuit (S1) further comprises a third switch (K3), the first bus end of the bridge arm (1) is connected to a first end of the third switch (K3), and a second end of the third switch (K3) is connected to the positive electrode of the DC charging port.

12. A vehicle, comprising the battery self-heating device according to any one of claims 1 to 11.
